Europäisches Patentamt

(19) European Patent Office

Office européen des brevets

(11) Veröffentlichungsnummer: **0 140 155**
**A2**

(12) # EUROPÄISCHE PATENTANMELDUNG

(21) Anmeldenummer: **84111432.5**

(22) Anmeldetag: **25.09.84**

(51) Int. Cl.⁴: **H 04 M 3/24**
**H 04 Q 3/545, G 06 F 11/20**

(30) Priorität: **26.09.83 DE 3334765**

(43) Veröffentlichungstag der Anmeldung:
**08.05.85 Patentblatt 85/19**

(84) Benannte Vertragsstaaten:
**AT BE CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **Bitzinger, Rudolf, Dipl.-Ing.**
**Lechbrucker Strasse 11**
**D-8000 München 71(DE)**

(72) Erfinder: **Engl, Walter, Dipl.-Ing.**
**Am Kellerberg 4**
**D-8152 Feldkrichen-W.(DE)**

(72) Erfinder: **Humml, Siegfried**
**An der Freiheit 130**
**D-8122 Penzberg(DE)**

(72) Erfinder: **Schreier, Klaus, Dipl.-Ing.**
**Nonnenwaldstrasse 8a**
**D-8122 Penzberg(DE)**

(54) **Prüfungseinrichtung zur Fehlererkennung bei gedoppelten Schaltungen, insbesondere Prozessoren eines Fernsprechvermittlungssystems.**

(57) Prüfeinrichtung zur Fehlererkennung bei gedoppelten, parallel betriebenen und Binärsignale liefernden Schaltungen (CP) – insbesondere Multiprozessoren (CP) der Zentralsteuereinheit eines Fernsprech-Vermittlungssystems – mit mindestens einem, Prüfbits aus den Binärsignalen erzeugenden, Paritätsnetzwerk pro Schaltung (CP), mit vieladrigen Ausgangsleitungen (Li, Ledc) für die Binärsignale und Prüfbits der Schaltungen (CP), welche mit einer oder mit mehreren, die Binärsignale und Prüfbits empfangenden Empfängereinheiten (Zentralspeicher CMY) verbunden sind, und mit Vergleichereinrichtungen (VE), welche bitweise die Identität von Bits auf einander entsprechenden Ausgangsleitungen (Ledc) beider Schaltungen (CP) überprüfen. Die Schaltungen (CP) enthalten jeweils eine EDC-Schaltung (EDC0, EDC1) mit eigenen Paritätsnetzwerken, wobei die die Binärsignale liefernden Leitungen der Schaltungen (CP) jeweils mit den Eingängen der EDC-Schaltungen (EDC0, EDC1) verbunden sind. Beide EDC-Schaltungen (EDC0, EDC1) erzeugen mittels ihrer Paritätsnetzwerke jeweils einen EDC-Code als Prüfbits der Binärsignale der betreffenden Schaltungen (CP). Nur die Ausgangsleitungen (Ledc) für die Prüfbits beider EDC-Schaltungen (EDC0, EDC1), aber nicht mehr die die Ausgangsbits weiterleitenden Ausgangsleitungen (Li) für die Binärsignale der Schaltungen (CP), sind mit den Vergleichereinrichtungen (VE) verbunden.

./...

0140155

SIEMENS AKTIENGESELLSCHAFT
Berlin und München

Unser Zeichen:
VPA 83 P 1723 E

Prüfeinrichtung zur Fehlererkennung bei gedoppelten
Schaltungen,insbesondere Prozessoren eines Fernsprech-
Vermittlungssystems.

Die Erfindung geht von der im Oberbegriff des Patentanspruchs 1 genannten Prüfeinrichtung aus. Die Erfindung
wurde insbesondere zur Steuerung der Abschaltung eines
fehlerbehafteten Prozessorpaares und Ersatz durch ein
anderes Prozessorpaar in einer Multiprozessor-Zentralsteuereinheit eines Fernsprech-Vermittlungssystems nach
Art der nicht vorveröffentlichten Patentanmeldungen
(83 P 1722, sowie 83 P 1724 bis 1727)

entwickelt. Die Erfindung eignet sich aber für die im
Oberbegriff des Patentanspruchs 1 definierten gedoppelten Schaltungen schlechthin.

Die Aufgabe der Erfindung ist, die im Oberbegriff des
Patentanspruchs 1 angegebenen Prüfeinrichtung so weiterzubilden, daß
- einerseits der Hardwareaufwand gering ist und
- andererseits die Sicherheit bzw. Zuverlässigkeit der
  Erkennung eines Fehlers sehr hoch ist, wobei im Prinzip sogar Einfachfehler nachträglich korrigierbar und
  die so korrigierten Daten nachträglich nochmals in der
  Prüfeinrichtung bei Bedarf auf Fehler geprüft werden
  können.

Diese Aufgabe wird durch die im Patentanspruch 1 genannten Maßnahmen gelöst.

Die in dem Patentanspruch 2 angegebenen zusätzlichen
Maßnahmen gestatten, zusätzlich in einem Multiprozessor-
Rechner besonders einfach ein fehlerbehaftetes Prozessor-
Be 1 Ky/31.08.1983

paar vom Bussystem, mit im Vergleich zur erreichten Zuverlässigkeit geringem Aufwand, abtrennen zu können.

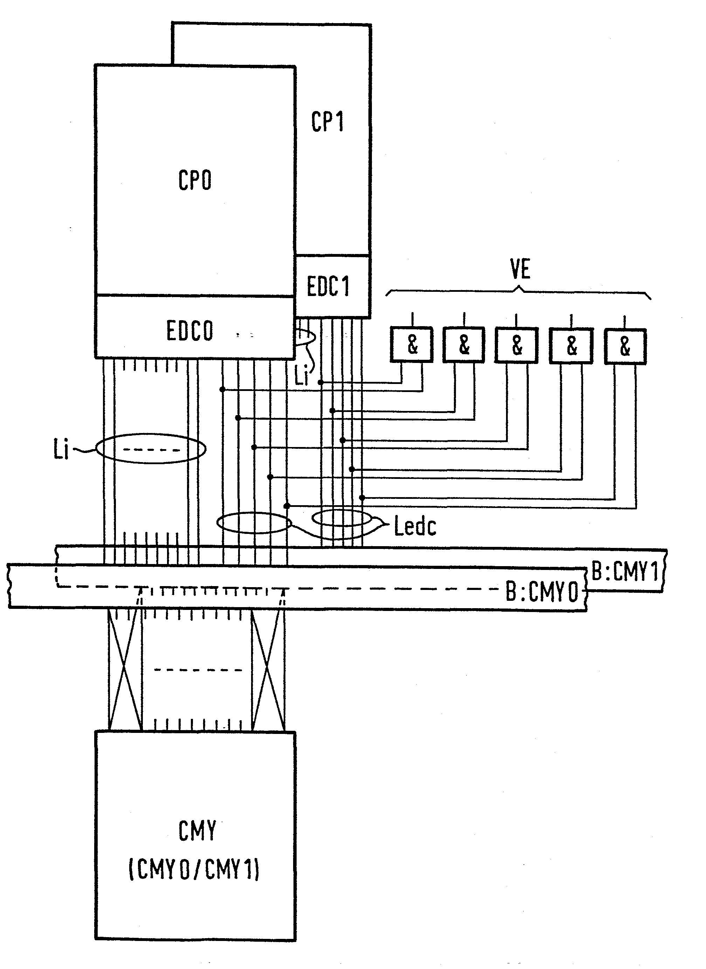

Die Erfindung wird anhand von einem Ausführungsbeispiel
näher erläutert, welches in der Figur gezeigt ist.

Die Figur zeigt einen Ausschnitt aus einer Multiprozessor-
Zentralsteuereinheit, bei der z.B. zwölf Prozessoren CP
über das Bussystem B:CMY mit dem Hauptspeicher CMY zusammenarbeiten. Aus Sicherheitsgründen ist nicht nur
der Prozessor CPO, vgl. COP/CP1, sondern auch das Bussystem B:CMY gedoppelt, vgl. B:CMYO/B:CMY1, evtl. auch
die Empfängereinheit CMY, d.h. der zentrale Speicher
CMY, vgl. CMYO/CMY1,dessen beide Zwillingsteile für
jeden der Prozessoren CP und Bussysteme B:CMY erreichbar
sind,vgl. die Leitungsauskreuzungen. Die - bevorzugt im
wesentlichen untereinander gleichaufgebauten - Prozessoren CP führen, zumindest wenn genügend Verbindungsanforderungen vorliegen, simultan bzw. quasisimultan jeweils vermittlungstechnische, sicherungstechnische und/
oder betriebstechnische Funktionen aus. Jeder Prozessor
kann dazu auch noch einen eigenen prozessorindividuellen
lokalen Speicher enthalten, um zeitweise unabhängig vom
zentralen Speicher CMY zu sein, z.B. für einige wenige
Daten und Programmschritte, die er derzeit verarbeitet
bzw. durchführt, und z.B. generell für häufig benutzte
Programmabschnitte.
Es handelt sich also beim gezeigten Beispiel um eine
Prüfeinrichtung zur Fehlererkennung der gedoppelten,
parallel betriebenen und Binärsignale liefernden Schaltungen bzw. Prozessoren CP der Zentralsteuereinheit eines
Fernsprech-Vermittlungssystems. Die Prüfeinrichtung enthält,jeweils eine Vielzahl von, Prüfbits aus den Binärsignalen der Prozessoren CP erzeugenden,Paritätsnetzwerke
pro Prozessor CP,nämlich in den EDC-Schaltungen EDCO,EDC1
der Pro-

zessoren CP(Error Detection and Correction-Schaltungen, vgl. z.B. die käuflichen Bausteine Am 2960 und die nicht vorveröffentlichte DE-OS 33 19 710),wobei die die Binärsignale liefernden Leitungen der Prozessoren CP jeweils mit den Eingängen der EDC-Schaltungen EDC0, EDC1 verbunden sind. Beide EDC-Schaltungen EDC0, EDC1 erzeugen mittels ihrer Paritätsnetzwerke jeweils einen EDC-Code als Prüfbits der Binärsignale der mit ihnen verbundenen Prozessoren CP.

Es gibt zweierlei vieladrige Ausgangsleitungen Li, Ledc der EDC-Schaltungen bzw.der Prozessoren, nämlich Ausgangsleitungen Li für die Binärsignale,also für die von den Prozessoren CP gelieferten Ausgangsinformationen und/ oder Adressen für den zentralen Speicher CMY, sowie Ausgangsleitungen Ledc für die Prüfbits der EDC-Schaltungen EDC0/EDC1 der Prozessoren CP. Der zentrale Speicher CMY erhält über das Bussystem B:CMY die Binärsignale und die Prüfbits, vgl. das spezielle Anwendungsbeispiel für prüfbitgesicherte Speicheradressierungen in der bereits erwähnten DE-OS 33 19 710.

Die gezeigte Prüfeinrichtung enthält ferner etliche, hier fünf,Vergleichereinrichtungen VE, welche bitweise die Identität von Prüfbits auf den betreffenden, einander entsprechenden Ausgangsleitungen Ledc beider Prozessoren CP überprüfen. Hierbei sind aber nur die Ausgangsleitungen Ledc für die Prüfbits beider EDC-Schaltungen EDC0, EDC1, aber nicht mehr die die Ausgangsbits weiterleitenden Ausgangsleitungen Li für die Binärsignale, mit den durch UND-Glieder gebildeten Vergleichereinrichtungen VE zur bitweisen Überprüfung des EDC-Code beider EDC-Schaltungen EDC0, EDC1 verbunden, aber nicht mehr zur bitweisen Überprüfung der Binärsignale beider Prozessoren CP.

0140155

Dies bedeutet eine wesentliche Einsparung von Hardware
für die Vergleichereinrichtungen VE, im Vergleich zu
einer bitweisen Überprüfung des gesamten Binärsignals,
erst recht zu einer bitweisen Überprüfung sowohl des
gesamten Binärsignals als auch sämtlicher Prüfbits. Die
Prüfbits sind ein so zuverlässiges Abbild des Binärsignals,
daß sogar Einfachfehler automatisch korrigierbar
sind. Daher ist der erfindungsgemäße Aufbau der Prüfeinrichtung, trotz seiner meistens sehr beachtlichen Einsparung von Hardware, in einer hohen Vielzahl von Anwendungsfällen - wie in Fernsprech-Vermittlungssystemen -
völlig ausreichend zuverlässig, um Fehler in den Binärsignalen eines der beiden Schaltungen/Prozessoren CP sofort zu erkennen, also um z.B. die Testprogramme für
diese Schaltungen anstoßen zu können und/oder z.B. um
diese Schaltungen CP ganz vom Bussystem B:CMY abschalten zu können. Besonders falls vorsorglich die Vergleicherschaltungen VE an die Ausgangsleitungen Ledc
zwischen den EDC-Schaltungen EDC0, EDC1 und dem Bussystem
B:CMY angeschlossen sind, kann das Bussystem B:CMY sogar besonders rasch abgetrennt werden; -im Prinzip sogar
bevor es zur Einleitung der Quittierung bzw. Nichtquittierung des Empfangs der Binärsignale und der Prüfbits kommt.

2 Patentansprüche
1 Figur

Patentansprüche.

1. Prüfeinrichtung zur Fehlererkennung bei gedoppelten, parallel betriebenen und Binärsignale liefernden Schaltungen (CP) - insbesondere Multiprozessoren (CP) der Zentralsteuereinheit eines Fernsprech-Vermittlungssystems - mit

- mindestens einem, Prüfbits aus den Binärsignalen erzeugenden, Paritätsnetzwerk pro Schaltung (CP),

- vieladrigen Ausgangsleitungen (Li, Ledc) für die Binärsignale und Prüfbits der Schaltungen (CP), welche mit einer oder mit mehreren, die Binärsignale und Prüfbits empfangenden Empfängereinheiten (Zentralspeicher CMY) verbunden sind, und

- Vergleichereinrichtungen (VE), welche bitweise die Identität von Bits auf einander entsprechenden Ausgangsleitungen (Ledc) beider Schaltungen (CP) überprüfen,

d a d u r c h   g e k e n n z e i c h n e t ,   daß

- die Schaltungen (CP) jeweils eine EDC-Schaltung (EDC0, EDC1) mit eigenen Paritätsnetzwerken enthalten, wobei die die Binärsignale liefernden Leitungen der Schaltungen (CP) jeweils mit den Eingängen der EDC-Schaltungen (EDC0, EDC1) verbunden sind,

- beide EDC-Schaltungen (EDC0, EDC1) mittels ihrer Paritätsnetzwerke jeweils einen EDC-Code als Prüfbits der Binärsignale der betreffenden Schaltungen (CP) erzeugen, und

- nur die Ausgangsleitungen (Ledc) für die Prüfbits beider EDC-Schaltungen (EDC0, EDC1), aber nicht mehr die die Ausgangsbits weiterleitenden Ausgangsleitungen (Li) für die Binärsignale der Schaltungen (CP), mit den Vergleichereinrichtungen (VE) zur bitweisen Überprüfung des EDC-Code beider EDC-Schaltungen (EDC0, EDC1), aber nicht mehr zur bitweisen Überprüfung der Binärsignale beider Schaltungen (CP), verbunden sind.

VPA 83 P 1 7 2 3 DE

0140155

2. Prüfeinrichtung nach Patentanspruch 1, d a d u r c h  g e k e n n z e i c h n e t , daß

- die Schaltungen Prozessoren (CP) sind,
- zwischen den Ausgangsleitungen (Li, Ledc) und den Empfängereinheiten (CMY) ein vieladriges Bussystem (B:CMY) eines Multiprozessorrechners eingefügt ist, und
- die Vergleichereinrichtungen(VE) an die Ausgangsleitungen (Ledc) zwischen den EDC-Schaltungen (EDC0, EDC1) und dem Bussystem (B:CMY) angeschlossen sind.

0140155